# EUROPEAN PATENT APPLICATION

(11) **EP 4 068 541 A1**
(43) Date of publication of application: **05.10.2022**
(21) Application number: 20891715.3
(22) Date of filing: 24.11.2020
(51) Int. Cl.: H02G 9/06, G01R 31/11

(54) **CABLE CONDUIT FOR CABLE LINE**

(30) Priority: 25.11.2019 RU 2019138038
(71) Applicant: Obshchestvo s Ogranichennoj Otvetstvennostyu "Energotek", Saint-Petersburg, 191119 (RU)
(72) Inventor: KULESHOV, Dmitrij Vladimirovich, Saint-Petersburg, 196158 (RU); DMITRIEV, Mikhail Viktorovich, Saint-Petersburg, 191036 (RU); SHABANOV, Aleksandr Evgenievich, Saint-Petersburg, 198215 (RU)
(74) Representative: Viering, Jentschura & Partner mbB Patent- und Rechtsanwälte
(86) International application number: PCT/RU2020/050345
(87) International publication number: WO 2021/107821

(57) **Abstract**

The invention relates to electrical wiring articles, in particular, to high-voltage cable power transmission lines, predominantly used for underground cable runs.

The technical result achieved by the invention consists in improving accuracy, reliability and speed of localization of cable faults in the conduit body of a cable line.

The technical result is achieved by using a conduit of a cable line, including a tubular body of polymeric material, provided with a through channel for routing an electric cable, and made segmented, including the combination of at least two alternating on an annular contour, interconnected, longitudinal case and electroconductive segments, arranged along the entire length of the body, together forming a closed rigid contour of the body wall, providing current flow through the electroconductive segment.

## Description

### Technical field

The invention relates to wiring products, in particular to high-voltage power transmission lines, mainly used for underground cable routes, and in general relates to facilitating the detection of sheath breakdown locations of cables laid in a cable line pipe.

### Prior art

There are known cable conduit constructions of cable lines, containing pipes, providing cable placement along the cable route

In particular, the cable lines which contain a conduit having a tubular body in the inner space of which the cable is laid are widely used nowadays. The tubular body of the conduit can be made as a single tube or as several tubes docked together.

Thus, there is a known cable line described in the magazine "Novosti Elektrotekhniki" 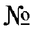 4(82), 2013 (pp.78-83). The conduit of the cable line under consideration is a tubular body containing a polyethylene wall, designed for laying along its length, in the inner space, of a power cable (6-500 kV), provided with an outer polymer sheath.

The use of polymeric tubular conduit, which has sufficient mechanical strength and resistance to external environment factors, provides cable protection from mechanical damage and external influences, which enhances the reliability of the cable line, and makes it possible to use it for laying both aboveground and underground cable routes.

However, the considered design of the cable conduit of a power line does not provide an opportunity to search for the place of damage of the outer sheath of a power cable by the methods known in the art, based on the search and localization by means of devices used for this purpose of the place on the cable line route, where the test current from the conductive screen of the power cable goes into the ground through the damaged outer sheath.

The casing wall, made of polyethylene, which is a dielectric, has no conductive properties in the direction from its inner surface to the outer surface and prevents the passage of current into the ground.

From previous art it is known solution [RU 186701], according to which solution of cable conduit of cable line having tubular body is disclosed, which wall is made of polymeric material and is made with provision of its electroconductive properties, causing possibility of current flow through wall in direction from its inner surface to outer surface, and ratio of diameter of inner surface of body wall to diameter of outer cable sheath makes value not less than 1,5. The stated ratio is chosen for the purpose of tangible decrease of the heating of the ground surrounding the cable line, and electroconductive properties of the polymer wall of the tubular body are organized in the direction from its inner surface to outer surface for all its thickness, that is in transverse (radial) direction and can be pointwise distributed along the body, including the grouping of electroconductive sections along the annular contour with distribution of such sections along the length of the tube. By totality of essential features, this solution can be taken as a prototype.

This solution only partially solves the problem of cable fault location, since in order to meet the requirements to mechanical and strength properties of the conduit the formation of conductive sections along the contour of the tubular body has its limitations, thereby reducing the accuracy of cable sheath fault location. This leads to unjustified time and labor costs, both for actual detection of cable breakdown places and for elimination of detected faults and renovation of the specified sections.

### The essence of the Invention

The technical problem, solving with the implementation of the invention is the possibility of testing and finding the place of damage of the outer sheath of the electric cable, placed in the protective tubular polymeric conduit, by methods based on the detection of the place of current exit into the ground.

The technical result achieved by the claimed invention consists in improving accuracy, reliability and speed of localization of cable faults in the conduit housing of a cable line.

The claimed technical result is achieved by using a conduit of a cable line including a tubular body, the wall of which is made of polymeric material, and provided with a through channel for laying an electric cable along its length, wherein the tubular body is segmented and includes a combination of at least two annularly interleaved longitudinal case and electroconductive segments interconnected and arranged along the entire length of the body to form a jointly closed, rigid body wall contour and to allow current to flow through the electroconductive segment in the direction from the inner surface of the body to its outer surface.

In one possible embodiment of the claimed invention, the tubular body wall is made multilayer, wherein the conductive properties of each layer of the case and electroconductive segments correspond in thickness to the purpose of each segment.

In another, possible embodiment, the at least one electroconductive segment is in the form of an insert, with provision for attachment in the conduit body along the longitudinal side portions of the segment.

In yet another, particular embodiment of the claimed invention, the at least one electroconductive segment is made of a compound having electrical conductivity.

In doing so, according to any of the possible embodiments of the claimed invention, the case and electroconductive segments may be made differently sized.

In one possible embodiment, the inner surface of the tubular body is additionally provided with a coating having a reduced electrical current resistance. Whereas, in another possible embodiment of the claimed invention, the outer surface of the tubular body is additionally provided with a coating having a reduced electrical current resistance.

In a particular case, the case and electroconductive segments are made of materials with different electrical resistances. In this case, the case segment can be made of dielectric materials.

### Brief description of drawings

The claimed invention is explained by drawings, wherein:
Fig. 1 is a solution of the segmented tubular conduit body of the cable line according to the invention, where: a) cross section; b) longitudinal section
Fig. 2 - direction of current output during cable sheath damage of cable line with segmented conduit tubular body.

It should be noted that the accompanying drawings illustrate only one of the most preferred embodiments of the invention and should not be regarded as limiting the contents thereof, which include other embodiments.

### Feasibility of the invention

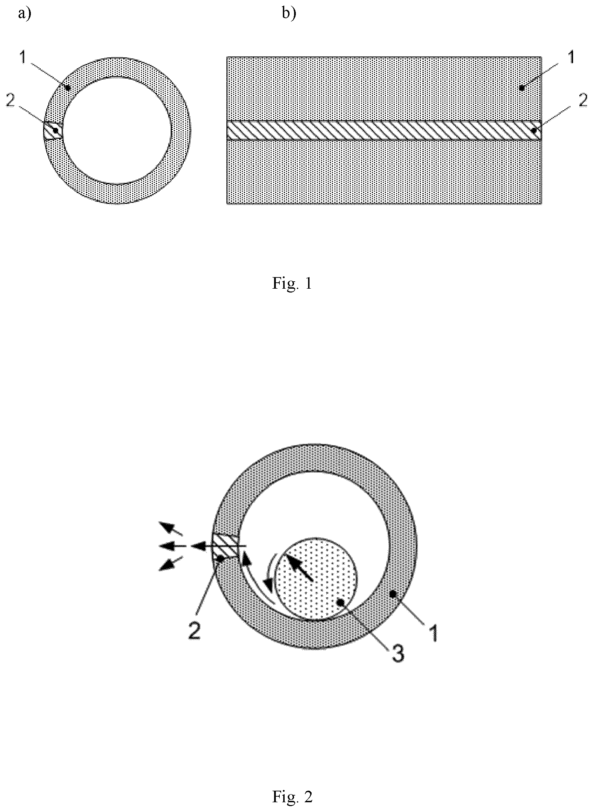

According to the claimed invention in the claimed solution, the conduit of the cable line is provided with a tubular body made segmented and consisting of case 1 and electroconductive 2 segments interconnected in longitudinal direction along the entire length of the tubular body. At the same time, the segments forming the conduit body have a thickness that provides for the formation of uniform external and internal surfaces of the body, of a given shape. According to the embodiment shown in FIGS. 1 and 2, the segments of tubular body are single-layered. However, in possible embodiments of the claimed invention, the tubular conduit body may be made multilayer. In this case, the electrically conductive properties of each layer of the case and electroconductive segments correspond in thickness to the purpose of each segment.

As one of the main tasks solved by the conduit is the possibility to apply the cable line both in ground and underground cable routes using cost-effective and technological methods of laying, in particular, the method of horizontal directional drilling, its body is preferably made of materials providing placement and preservation of cable position in the place of the cable route as well as cable protection from mechanical damage and external influences during its operation. Thus, the case and electroconductive segments forming tubular body of conduit together possess sufficient degree of rigidity, elasticity and chemical resistance to influence of aggressive environments and unfavourable operating conditions, providing required operational characteristics of cable line conduit. Therein, due to the use of polymeric material for the manufacture of case segments of the conduit wall of the casing (body) which is resistant to corrosion and mechanical effects, flexibility, lightness, durability, the convenience of operation and reliability of the claimed cable line increases.

The electroconductive segments of the conduit body are made with a sufficient degree of mechanical strength and chemical resistance comparable to that of the case segments, however, in a preferred embodiment, the materials of the case and electroconductive segments have different electrical current resistance. The case segments may be made of dielectric materials, such as thermoplastic polymeric materials. Whereas, for the electroconductive segments, materials are selected electrical current resistance materials, providing the possibility of output current from the inner cavity of the conduit to the outside when the outer sheath of the cable located in the cable line is damaged.

According to the claimed invention, the mating case and electroconductive segments can have different configuration and geometrical sizes, depending on operating conditions, configuration of the conduit housing and cable conduit, as well as cable lines (cables) placed in the conduit housing, but are interconnected to form a single tubular conduit body contour having specified mechanical parameters of the conduit. Herewith, the inner surface of each segment has contact with the inner surface and space of the tubular body, and the outer surface with the outer environment (ground), providing transfer of electric current through the electrically conducting segment from the inner surface of the tubular body to the outside, where the current spreads into the ground and can be detected by means known from the prior art. Since all enclosure segments, including conductive ones, are longitudinally elongated over the entire length of the conduit tube body, the point of current release into the ground can be localized with a high degree of accuracy. The number of conductive segments and their size do not have a significant influence on the location accuracy, they only contribute to a clearer identification of the leakage current and allow to exclude the possibility of accidental leakage current insulation, for example in case of complex topologies of cable lines and their type (single-phase, three-phase).

In a particular case of the claimed invention, the electroconductive segment may be in the form of a long-length insert, over the entire length of the body, with attachment along the adjacent longitudinal sides of the adjacent case segments. Fastening can be carried out, for example, by making adjacent segments by coextrusion, by fastening adjacent surfaces by adhesive bonding, by mechanical fastening, for example by means of tongue and groove fastening, and by other prior art methods of fastening adjacent segments used in case parts of pipelines and cable lines. Advantageously, the mating points between the conductive segments and the case segments are hermetically sealed.

As materials for making tubular body electroconductive segments, it is preferable to use polymeric materials having specific volumetric resistance not more than 10000 Ohm?m. For example, composite polymeric materials based on different polymers (thermo-, reacto-, elasto- plastics) containing conductive fillers (carbon black, graphite, carbon, metallic and metallized fibers, metal powder and other) or polymeric materials, where molecules themselves or certain constructed supramolecular formations possess electrical conductivity, may be used as conductive polymeric materials. The electroconductive segment may also contain, where appropriate and preferably, in combination with the above conductive particles or fibers, initially electrically conductive polymers such as polyacetylene, polythiophene, polyaniline or polypyrrole or ionomers containing alkali and/or alkaline earth metal ions or mixtures thereof. Due to the location of the cable 3 (Fig. 2) in the tubular body of the conduit, the wall of the casing which is made with the provision of its conductive properties, by means of the longitudinal electroconductive segments, providing for the possibility of current flow through the wall in the direction from its inner surface to the outer surface in the claimed cable line is organized for the current formed in the inner space of the body with damage to the external cable sheath through the casing wall outside it.

In practice, the release of current from the conduit body to the surrounding ground is difficult due to its low electrical conductivity resulting from the long-term exposure of the ground to high operating temperatures in the cable. For example, the core temperature of a high voltage cable in normal operation reaches 90°C and the temperature of its outer sheath reaches 80°C. Ground heating results in the absence or minimisation of moisture content filling the gaps between ground particles and possessing conductive properties, which leads to a decrease in ground conductivity.

Placement of the cable in an electrically conducting polymeric tubular body contributes to reduction of the temperature of heating of the ground surrounding the cable line and, accordingly, to reduction of negative influence of heating on the electrical conductivity of the ground, the greater is the size of the gap between the cable and the tubular housing, which is determined by the ratio of diameters of the housing and the cable.

Thus, in the claimed cable line, the current path is organized from the internal space of the conduit body, where it enters from the surface of the cable from the damaged outer sheath, through the conduit body wall beyond its limits into the surrounding ground, where the current can be detected by devices performing the cable fault location. The wall of the casing can have a coating of conductive material on the inside, outside or both sides of the enclosure (multilayer wall) to combine the conductive parts in a transverse direction in order to facilitate the discharge of current from the inside of the conduit body outside the conduit body..

The conduit body can be made as a single tube or as several tubes connected to each other.

A power cable (up to 500 kV), containing a core, core insulation, metallic shield and outer sheath, can mainly be used as an electrical cable.

The cable is installed inside the tubular body, preferably with areas of contact (mechanical and/or electrical) of its outer sheath with the inner surface of the conduit body.

In general, the conduit may also contain couplings, end caps, and other (not shown in the drawing), without changing the design of the segmented conduit body according to the claimed invention.

The device works as follows.

At delivery of the test current along the cable shield the current from the damaged cable sheath 3 (fig.2) comes to its outer surface, then through the place of contact of cable and tubular body the current comes to the inner surface of the case segment 1, from where it goes through the electroconductive segment 2 into the ground surrounding the tubular body, where it is fixed by standard methods and devices

The mere fact that the test current is flowing from the test apparatus connected to the cable means that the cable sheath is indeed damaged somewhere and that the current is flowing somewhere into the ground. The location of the test current exiting the cable into the ground, recorded by the instrumentation, will indicate the exact location of the fault on the cable line route. In doing so, the segmented conduit body minimizes the cost of troubleshooting by minimizing the time and labor required to locate the exact location of the cable fault in the cable run and to open the conduit tubular body to allow access to the cable for repair purposes.

## Claims

1. A Conduit of cable line, including a tubular body, the wall of which is made of polymeric material, and provided with a through channel for laying an electric cable along its length, wherein the tubular body is segmented and includes a combination of at least two annularly interleaved longitudinal case and electroconductive segments interconnected and arranged along the entire length of the body to form a jointly closed, rigid body wall contour and to allow current to flow through the electroconductive segment in the direction from the inner surface of the body to its outer surface

2. The conduit according to claim 1 wherein the tubular body wall is made multilayer, wherein the conductive properties of each layer of the case and electroconductive segments correspond in thickness to the purpose of each segment.

3. The conduit according to claim 1, wherein at least one electroconductive segment is in the form of an insert, with provision for attachment in the conduit body along the longitudinal side portions of the segment.

4. The conduit according to claim 1 wherein the segmented tubular body is made by coextrusion of the body and the electroconductive segments.

5. The conduit according to claim 1, wherein at least one electroconductive segment is made of a compound having electrical conductivity.

6. A conduit according to any of the claims. 1-5 wherein the case and electroconductive segments may be made differently sized.

7. The conduit according to claim 6, wherein the inner surface of the tubular body is additionally provided with a coating having a reduced electrical current resistance.

8. The conduit according to claim 6, wherein the outer surface of the tubular body is additionally provided with a coating having a reduced electrical current resistance.

9. The conduit according to claim 6, wherein the case and electroconductive segments are made of materials with different electrical resistances.

10. The conduit according to claim 9 wherein the case segment can be made of dielectric materials.
